# EUROPÄISCHE PATENTSCHRIFT

(11) **EP 4 251 483 B1**
(45) Veröffentlichungstag und Bekanntmachung des Hinweises auf die Patenterteilung: **07.01.2026**
(21) Anmeldenummer: 21805367.6
(22) Anmeldetag: 21.10.2021
(51) Int. Cl.: B60T 13/12, B60T 13/66, B60T 13/68, B60T 13/74

(54) **VERFAHREN ZUR STEUERUNG EINER BREMSANLAGE UND BREMSANLAGE FÜR KRAFTFAHRZEUGE**
METHOD FOR CONTROLLING A BRAKING SYSTEM AND BRAKING SYSTEM FOR MOTOR VEHICLES
PROCÉDÉ DE COMMANDE D'UN SYSTÈME DE FREINAGE ET SYSTÈME DE FREINAGE POUR VÉHICULES AUTOMOBILES

(30) Priorität: 27.11.2020 DE 102020214972
(43) Veröffentlichungstag der Anmeldung: 04.10.2023
(73) Patentinhaber: AUMOVIO Germany GmbH, 60488 Frankfurt am Main (DE)
(72) Erfinder: STANOJKOVSKI, Aleksandar, 60488 Frankfurt am Main (DE)
(74) Vertreter: Aumovio Corporation
(86) Internationale Anmeldenummer: PCT/DE2021/200158
(87) Internationale Veröffentlichungsnummer: WO 2022/111767

(56) Entgegenhaltungen:
- DE-A1- 102012 217 272
- JP-A- 2015 110 361
- US-A1- 2016 009 267
- US-A1- 2019 210 581

## Beschreibung

Die Erfindung betrifft ein Verfahren zur Steuerung einer Bremsanlage aufweisend einen Linearaktuator und eine hydraulische Pumpe.

Moderne Bremsanlagen arbeiten heutzutage meist nach dem brake-by-wire Verfahren. Das heißt, der Fahrer hat über das Bremspedal in einem normalen Betriebsmodus keine direkte mechanische Verbindung an die einzelnen Radbremsen mehr. Stattdessen wird über eine Sensorik ein Fahrerbremswunsch erfasst und eine meist elektrische Druckbeaufschlagungseinrichtung entsprechend des Fahrerbremswunschs angesteuert einen Bremsdruck in den Radbremsen aufzubauen. Die dabei eingesetzten Druckbeaufschlagungseinrichtungen müssen dabei eine Vielzahl von Anforderungen erfüllen. Bisher ist es dabei nicht möglich mit akzeptablen Kosten eine Bremsanlage zu schaffen, die bei sehr schnellem Ansteigen der Bremsanforderung einen Bremsdruck genauso schnell aufbauen kann wie eine klassische Bremsanlage mit direktem mechanischem Durchgriff des Fahrers auf die Radbremse. Da bei hohen Geschwindigkeiten bereits geringfügige Verzögerungen beim Druckaufbau zu einer erheblichen Verlängerung des Bremswegs führen, haben Fahrzeuge mit derartigen Bremsanlagen große Bremswegnachteile gegenüber solchen mit klassischen Bremsanlagen.

Aus der JP 2015 110361 A ist eine Bremsanlage bekannt, welche einen Linearaktuator und eine hydraulische Kolbenpumpe seriell hintereinandergeschaltet als Druckbereitstellungseinrichtungen aufweist. Wird basierend auf einer Bremspedalbetätigung eine Notbremsung festgestellt, so wird der Solldruck auf einen maximalen Wert gesetzt. Dazu wird neben dem Linearaktuator auch die Pumpe betrieben, den Druck auf den Sollwert zu erhöhen.

Eine weitere Bremsanlage mit einer hydraulischen Kolbenpumpe, welche seriell hinter einen Linearaktuator mit einem Masterzylinder geschaltet ist, ist aus der DE 10 2012 217 272 A1 bekannt. Wenn ein Druck höher als der des Masterzylinders angefordert wird, wird der Druck durch die Kolbenpumpe weiter erhöht.

Es ist somit Aufgabe der Erfindung ein Verfahren zur Steuerung einer solchen Bremsanlage anzugeben, welche diese Nachteile vermeidet.

Die Aufgabe wird gelöst durch ein Verfahren nach Anspruch 1, in dem ein Bremsanforderungssignal überwacht wird und bei einer Änderungsrate des Bremsanforderungssignals größer als ein Schwellwert der Linearaktuator und die hydraulische Pumpe in einen Synchronbetrieb geschaltet werden. In dem Synchronbetrieb wird der Linearaktuator und die hydraulische Pumpe gleichzeitig betrieben, um hydraulisches Volumen in zumindest eine Radbremse zu fördern, um einen Bremsdruck in der Radbremse aufzubauen. Linearaktuator und hydraulische Pumpe fördern somit gleichzeitig in eine gemeinsame Radbremse. Es wird mit dem erfindungsgemäßen Verfahren direkt an dem Bremsanforderungssignal erkannt, ob es beider Druckquellen benötigt, um die Anforderung umzusetzen. Somit kann ein angeforderter Bremsdruck besonders schnell erreicht werden, wodurch sich der Bremsweg des Kraftfahrzeugs effizient reduzieren lässt.

In einer bevorzugten Ausführungsform der Erfindung wird das Bremsanforderungssignal durch einen Bremsensensor oder ein Fahrassistenzsystem generiert wird. Als Bremsensensor kommen insbesondere ein ein Bremspedalwegsensor und/oder ein Drucksensor in Frage. Dabei kann direkt ein Hauptzylinderdruck oder der Systemdruck gemessen und verwendet werden. Alternativ ist das Bremspedal trocken ausgebildet, das heißt es besteht keine Verbindung an die Hydraulik. In diesem Fall kann ein entsprechender Bremspedalsensor verwendet werden. Als Fahrassistenzsysteme kommen insbesondere eine automatische Abstandsregelung und/oder ein Notbremsassistent in Betracht, die direkt und fahrerunabhängig ein Bremsanforderungssignal generieren.

Es ist möglich, dass die hydraulische Pumpe und der Linearaktuator seriell hintereinandergeschaltet werden, insbesondere indem ein hydraulisches Ventil zwischen einer Saugseite der hydraulischen Pumpe und einem Ausgang des Linearaktuators geöffnet wird. Ein durch den Linearaktuator erzeugter hydraulischer Druck wird dabei durch die hydraulische Pumpe weiter verstärkt, sodass schneller ein höherer Bremsdruck in den Radbremsen erreicht wird.

Erfindungsgemäß werden die hydraulische Pumpe und der Linearaktuator parallelgeschaltet, wobei die Saugseite der hydraulischen Pumpe mit einem Hydraulikreservoir verbunden wird. Somit fördern hydraulische Pumpe und der Linearaktuator im Wesentlichen unabhängig voneinander Volumen in die Radbremse. Die Volumina von hydraulischer Pumpe und Linearaktuator summieren sich dabei zu einem Gesamtvolumen auf, welches in die Radbremse gefördert wird. Somit wird das in der Radbremse benötigte Volumen besonders schnell erreicht. Es ist auch möglich, zwischen beiden Modi umzuschalten. So wird zu Beginn der Bremsung ein großes Volumen benötigt, da sich der Kolben der Radbremse noch weit bewegt und die beiden Druckbeaufschlagungseinrichtungen werden dazu parallel geschaltet. Sobald Kontakt zwischen Bremsbelag und Bremsscheibe hergestellt ist, wird kein großes hydraulisches Volumen mehr benötigt. Die beiden Druckbeaufschlagungseinrichtungen können dann seriell hintereinandergeschaltet werden.

In einer weiteren bevorzugten Ausführungsform der Erfindung wird der Linearaktuator von einem ersten Steuergerät geregelt und die hydraulische Pumpe von einem zweiten Steuergerät geregelt. Das erste Steuergerät und das zweite Steuergerät kommunizieren dabei über eine Kommunikationsschnittstelle miteinander. Dies bietet eine zusätzliche Redundanz, da bei Ausfall eines der Steuergeräte noch zumindest eine der Druckbeaufschlagungseinrichtungen funktionstüchtig bleibt, um das Fahrzeug in den Stillstand abzubremsen.

In einer besonders bevorzugten Ausführungsform der Erfindung wertet das erste Steuergerät das Bremsanforderungssignal aus und sendet bei erkannter Änderungsrate des Bremsanforderungssignals größer als der Schwellwert einen Befehl zum Aktivieren der hydraulischen Pumpe an das zweite Steuergerät. Es ist daher nicht nötig eine zusätzliche Verbindung zwischen der hydraulischen Pumpe und dem ersten Steuergerät zu schaffen, da die Ansteuerungslogik beim zweiten Steuergerät verbleibt.

In einer weiteren besonders bevorzugten Ausführungsform der Erfindung ist der Bremsensensor ein hydraulischer Drucksensor, welcher durch das zweite Steuergerät ausgelesen wird. Dies kann ein Systemdrucksensor oder ein Radbremsendrucksensor sein. Somit kann das zweite Steuergerät, welches für die Regelung der hydraulischen Pumpe verantwortlich ist, selbsttätig erkennen, ob die hydraulische Pumpe benötigt wird.

In einer besonders bevorzugten Ausführungsform der Erfindung wertet das zweite Steuergerät das Bremsanforderungssignal aus, um bei erkannter Änderungsrate des Bremsanforderungssignals größer als der Schwellwert die hydraulische Pumpe zu aktivieren.

In einer besonders bevorzugten Ausführungsform der Erfindung wertet das zweite Steuergerät ein erstes Bremsanforderungssignal aus. Dies kann insbesondere das Signal eines Sensors sein, der direkt vom zweiten Steuergerät überwacht wird. Bei erkannter Änderungsrate des ersten Bremsanforderungssignals größer als ein erster Schwellwert steuert das zweite Steuergerät die hydraulische Pumpe mit einer ersten Leistung an. Das erste Steuergerät wertet zur gleichen Zeit ein zweites Bremsanforderungssignal aus und sendet bei erkannter Änderungsrate des zweiten Bremsanforderungssignals größer als ein zweiter Schwellwert einen Befehl zum Aktivieren der hydraulischen Pumpe an das zweite Steuergerät. Dabei kann es sich insbesondere um das Signal eines Sensors handeln, der direkt mit dem ersten Steuergerät verbunden ist. Das zweite Steuergerät regelt dann bei Erhalt des Befehls die hydraulische Pumpe auf eine zweite Leistung, welche größer ist als die erste Leistung. Somit wird die Pumpe ohne Zeitverzug direkt aktiviert, aber erst bei Empfang des eigentlichen Befehls vom ersten Steuergerät auf die volle benötigte Leistung eingestellt.

In einer besonders bevorzugten Ausführungsform der Erfindung findet ein Übergang von dem vorstehend beschriebenen Synchronbetrieb in einen Einzelbetrieb der hydraulischen Pumpe statt, wenn der Linearaktuator seinen Kniepunkt erreicht, eine ABS-Regelung ausgelöst wird oder ein vorbestimmter Blockierdruck erreicht wird. Der Kniepunkt des Linearaktuators ist erreicht, wenn der Kolben des Linearaktuators ganz nach vorne gefahren ist und dieser demnach zur weiteren Volumenförderung erst wieder zurückfahren muss und dabei Bremsflüssigkeit aus einem Bremsflüssigkeitsreservoir ansaugt. Sobald ein Blockieren der Räder oder zumindest eines Rades erkannt ist, kann ebenfalls auf einen Einzelbetrieb der hydraulischen Pumpe umgeschaltet werden, da der Druck über die hydraulische Pumpe mit zugehörigem Überströmventil besonders genau eingestellt werden kann. In einer besonders einfachen Regelung ist ein vorbestimmter Druckwert, der Blockierdruck, in der Bremsanlage des Fahrzeugs hinterlegt. Sobald der Systemdruck diesen Druck erreicht wird ebenfalls auf den Einzelbetrieb der hydraulischen Pumpe umgeschaltet.

In einer weiteren bevorzugten Ausführungsform der Erfindung ist ein hydraulisches Ventil parallel zur hydraulischen Pumpe und seriell zwischen Linearaktuator und einer Radbremse angeordnet und das hydraulische Ventil wird im Synchronbetrieb geöffnet oder geschlossen. Wird das Ventil geöffnet, so kann der Linearaktuator einerseits durch dieses Ventil andererseits durch die hydraulische Pumpe Volumen in die Radbremse fördern.

In einer weiteren bevorzugten Ausführungsform der Erfindung umfasst die Bremsanlage zwei Teilkreise, wobei jedem Teilkreis zwei Radbremsen und eine hydraulische Pumpe zugeordnet ist und im Synchronbetrieb beide Pumpen aktiviert werden und der Linearaktuator mit nur einem Teilkreis oder beiden Teilkreisen verbunden wird.

Die Aufgabe wird außerdem gelöst durch eine Bremsanlage für Kraftfahrzeuge aufweisend einen Linearaktuator und eine hydraulische Pumpe, wobei die Bremsanlage dazu eingerichtet ist, ein vorstehend beschriebenes Verfahren durchzuführen.

Weitere Merkmale, Vorteile und Anwendungsmöglichkeiten der Erfindung ergeben sich auch durch die nachfolgende Beschreibung von Ausführungsbeispielen und der Zeichnungen. Dabei gehören alle beschriebenen und/oder bildlich dargestellten Merkmale sowohl einzeln als auch in beliebiger Kombination zum Gegenstand der Erfindung, auch unabhängig von ihrer Zusammenfassung in den Ansprüchen oder deren Rückbezügen.
- Fig. 1: zeigt schematisch eine erfindungsgemäße Bremsanlage erster Ausführungsform,
- Fig. 2: zeigt schematisch eine erfindungsgemäße Bremsanlage zweiter Ausführungsform;

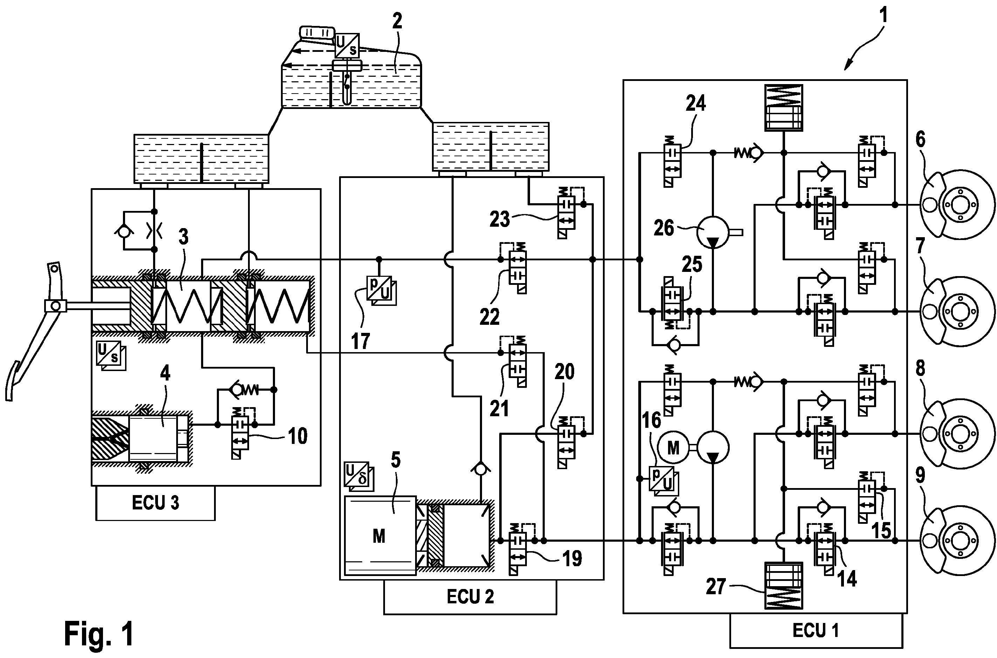

In Figur 1 ist eine hydraulische Bremsanlage 1 dargestellt, mit der das erfindungsgemäße Verfahren durchgeführt werden kann. Die Bremsanlage 1 ist mit einer erweiterten Redundanz ausgestattet, wie sie für autonomes Fahren benötigt wird, die insbesondere durch zwei unabhängige Druckbeaufschlagungseinrichtungen realisiert ist. Die Bremsanlage 1 arbeitet in einem normalen Betriebsmodus nach dem Brake-by-wire Verfahren. Dabei wird durch den Fahrer eine Bremskraft auf einen Hauptbremszylinder 3 ausgeübt, der als Tandem-Hauptbremszylinder 3 mit zwei Kammern ausgeführt ist. Dadurch wird hydraulisches Volumen über ein geöffnetes Simulatorventil 10 in einen Simulator 4 verschoben, durch den ein Pedalgefühl generiert wird. In der gezeigten Ausführungsform wird lediglich eine Kammer des Tandem-Hauptbremszylinders 3 mit dem Simulator 4 verbunden, während die zweite Kammer lediglich gegen ein geschlossenes erstes Absperrventil 21 drückt. Das erste Absperrventil 21 trennt und verbindet den Tandem-Hauptbremszylinder 3 mit einem ersten Teilkreis der Bremsanlage 1, der die Radbremsen 7, 8 der Räder hinten links und vorne rechts mit den jeweiligen Einlassventilen 14 und den jeweiligen Auslassventilen 15 umfasst. Ein zweites Absperrventil 22 verbindet den Tandem-Hauptbremszylinder 3 mit dem zweiten Teilkreis der Bremsanlage 1. Der zweite Teilkreis der Bremsanlage 1 umfasst die Radbremsen 6, 9 der Räder hinten rechts und vorne links mit den jeweiligen Einlassventilen 14 und Auslassventilen 15. Auch das zweite Absperrventil 22 ist im normalen Betriebsmodus geschlossen. In der gezeigten Ausführungsform sind erster und zweiter Teilkreis im Wesentlichen symmetrisch aufgebaut. Eine andere Verteilung der Radbremsen 6, 7, 8, 9 auf den ersten und zweiten Teilkreis, beispielsweise mit beiden Vorderradbremsen im ersten Teilkreis und den Hinterradbremsen im zweiten Teilkreis, ist ebenfalls möglich.

Weiter ist in der Bremsanlage 1 ein Linearaktuator 5 vorgesehen, der über ein erstes Versorgungsventil 19 mit dem ersten Teilkreis verbunden ist und über ein zweites Versorgungsventil 20 mit dem zweiten Teilkreis verbunden ist. Das erste Versorgungsventil 19 verbindet und trennt den ersten Teilkreis vom dem Linearaktuator 5 und das zweite Versorgungsventil 20 verbindet und trennt den zweiten Teilkreis vom Linearaktuator 5. Durch den symmetrischen Aufbau kann auch der zweite Teilkreis als erster Teilkreis und der erste Teilkreis als zweiter Teilkreis im Sinne der Erfindung aufgefasst werden. In einem normalen Betriebsmodus sind das erste Versorgungsventil 19 und das zweite Versorgungsventil 20 geöffnet, sodass der Linearaktuator 5 Bremsflüssigkeit in alle Radbremsen 6, 7, 8, 9 fördern kann. Die Bremsflüssigkeit fließt dabei aus dem Linearaktuator 5, durch ein geöffnetes Umschaltventil 25 des jeweiligen Teilkreises und das Eingangsventil 14 der jeweiligen Radbremsen 6, 7, 8, 9 in die Radbremse 6, 7, 8, 9. Die Pumpentrennventile 24 der beiden Teilkreise sind im normalen Betriebsmodus geschlossen. Die Bremskraft wird somit durch den Linearaktuator 5 generiert.

Zu einem Druckabbau der Radbremsen 6, 7, 8, 9, beispielsweise bei einer ABS Regelung, können die Auslassventile 15 der einzelnen Radbremsen 6, 7, 8, 9 geöffnet werden. Die Bremsflüssigkeit fließt dann durch das jeweilige Auslassventil 15 in einen Niederdruckspeicher 27 des jeweiligen Teilkreises.

Beide Teilkreise weisen je eine hydraulische Pumpe 26 auf, die je mit einem Umschaltventil 25, einem Pumpentrennventil 24 und einem Niederdruckspeicher 27 verbunden ist. In einer Rückfallebene, beispielsweise bei Defekt des Linearaktuators werden die Absperrventile 21, 22 geöffnet, die Umschaltventile 25 geschlossen und die Pumpentrennventile 24 geöffnet. Bei Aktuierung des Bremspedals werden die hydraulischen Pumpen 26 aktiviert, so dass diese Bremsflüssigkeit in die Radbremsen 6, 7, 8, 9 pumpen. Die hydraulischen Pumpen 26 verstärken somit den durch den Fahrer über den Tandemhauptbremszylinder 3 ausgeübten Bremsdruck.

Der erste Teilkreis und der zweite Teilkreis sind somit im Wesentlichen parallel aufgebaut. Der Systemdruck in dem ersten Teilkreis kann durch eine Druckmesseinrichtung 16 bestimmt werden, welche als Systemdrucksensor 16 bezeichnet wird. Darüber hinaus ist am Tandemhauptbremszylinder 3 eine weitere Druckmesseinrichtung 17 angeordnet, um den vom Fahrer ausgeübten Bremsdruck zu bestimmen, die als Hauptzylinderdrucksensor 17 bezeichnet wird. Durch ein Nachsaugventil 23 kann eine Verbindung des zweiten Teilkreises zu dem Reservoir 2 hergestellt werden. Dieses Ventil kann insbesondere geöffnet werden, wenn das Bremsflüssigkeitsvolumen in dem Bremskreis verringert oder erhöht werden soll.

In Normalbetrieb wird durch eine Steuereinheit der Pedalwegsensor und der Hauptzylinderdrucksensor 17 überwacht und basierend auf deren Sensorsignalen ein Bremsanforderungssignal generiert. Die Steuereinheit regelt daraufhin den Linearaktuator 5 basierend auf dem Bremsanforderungssignal einen Bremsdruck zu erzeugen.

Wird nun festgestellt, dass die Änderungsrate, also die zeitliche Ableitung, des Bremsanforderungssignals einen Schwellwert übersteigt, so wird ein Synchronbetrieb gestartet, in welchem sowohl der Linearaktuator 5 als auch die hydraulische Pumpe 26 betrieben werden, um gemeinsam Bremsflüssigkeit in zumindest eine Radbremse 6, 7, 8, 9 zu fördern. Die Bremsanlage wird dabei weiter im Brake-by-wire Modus betrieben, das heißt, die Absperrventile 21, 22 bleiben geschlossen und durch den Hauptbremszylinder 3 wird weiterhin Bremsflüssigkeit nur in den Simulator 4 verschoben. Die Umschaltventile 25 werden geschlossen und die Pumpentrennventile 24 geöffnet, sodass die hydraulischen Pumpen 26 seriell hinter den Linearaktuator geschaltet werden. Somit wird durch die hydraulischen Pumpen 26 ein durch den Linearaktuator aufgebauter hydraulischer Druck weiter verstärkt. An den Radbremsen 6, 7, 8, 9 liegt somit schnell ein großer Bremsdruck an. Somit kann bei einem schnellen Pedalantritt rasch eine geforderte Bremskraft aufgebaut und der Bremsweg somit entscheidend verkürzt werden.

Alternativ kann die hydraulische Pumpe parallel zum Linearaktuator geschaltet werden. Dazu wird das Umschaltventil 25 geöffnet und das Pumpentrennventil 24 geschlossen. Die hydraulische Pumpe 26 saugt dann aus dem Niederdruckspeicher 27 und pumpt dieses Volumen an die jeweiligen Radbremsen 6, 7, 8, 9, während der Linearaktuator gleichzeitig durch das geöffnete Umschaltventil Volumen in die Radbremsen 6, 7, 8, 9 fördert.

Die Steuerung des Linearaktuators 5 erfolgt dabei durch eine Steuereinheit ECU2 und die Steuerung der hydraulischen Pumpe 26 durch eine Steuereinheit ECU 1. Die Steuereinheit ECU 1 erhält außerdem Daten eines Systemdrucksensors 16, welcher direkt mit dieser Steuereinheit ECU 1verbunden ist. Dabei ist vorgesehen, dass die Steuereinheit ECU 1 den Systemdruck mittels des Systemdrucksensors 16 überwacht und bei einer Änderungsrate größer als ein zugehöriger Systemdruckänderungsschwellwert das Pumpentrennventil öffnet und die hydraulische Pumpe 26 mit einer ersten Leistung beziehungsweise Dutycycle aktiviert. Gleichzeitig überwacht das Steuergerät ECU2 einen Hauptzylinderdruck mittels des Hauptzylinderdrucksensors 17 und sendet bei Erkennen einer Änderungsrate größer als ein zugehöriger Hauptzylinderdruckänderungsschwellwert ein Pumpenaktivierungssignal über eine CAN Schnittstelle an die Steuereinheit ECU 1. Sobald die Steuereinheit ECU 1 das Pumpenaktivierungssignal empfängt, schaltet diese die hydraulische Pumpe 26 auf eine zweite, größere Pumpleistung beziehungsweise Dutycycle um. Somit ist es möglich die eigentliche Steuerung des Synchronbetriebs bei der Steuereinheit ECU 2 zu regeln, die Signallaufzeiten jedoch durch eine Vorabansteuerung der hydraulischen Pumpe 26 durch die Steuereinheit ECU 1 zu überbrücken.

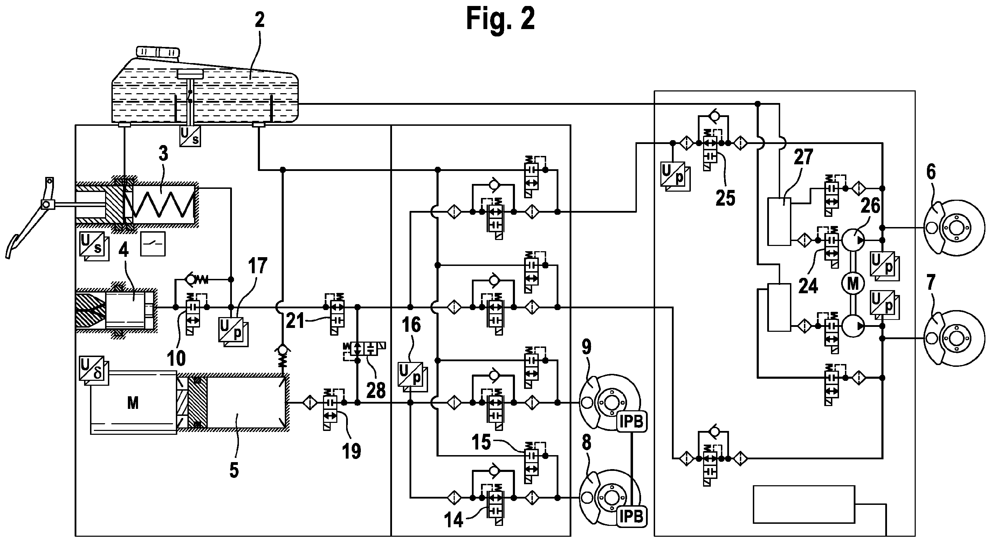

In der Figur 2 ist nun eine zweite Ausführungsform einer Bremsanlage dargestellt. Die Bremsanlage der Fig. 2 weißt einen Hauptbremszylinder 3 auf, welcher nur mit einer einzigen Kammerausgeführt ist. Dieser ist im Normalbetrieb über ein geöffnetes Simulatorventil 10 mit dem Simulator 4 verbunden. Eine Absperrventil 21 ist im Normalebtrieb geschlossen, sodass der Hauptbremszylinder keine strömungsoffene Verbindung an die Radbremsen 6, 7, 8, 9, aufweist. Der Linearaktuator 5 ist über ein im Normalbetrieb geöffnetes Versorgungsventil 19 und über ebenfalls geöffnete Einlassventile 14 mit den Radbremsen 8, 9 verbunden. Weiter weist der Linearaktuator 5 eine Verbindung über ein Kreistrennventil 28 und über entsprechende Einlassventile 14 mit den Radbremsen 6, 7 der Vorderachse auf. Die Verbindung ist durch eine weitere Bremseinheit mit einem Umschaltventil 25 geführt, welches im Normalbetrieb geöffnet ist. Die weitere Bremseinheit umfasst aus Redundanzgründen eine weitere Druckbeaufschlagungseinrichtung, welche als hydraulische Pumpe 26 ausgeführt ist. Die hydraulische Pumpe 26 ist saugseitig über ein normal geschlossenes Pumpentrennventil 24 mit einem Niederdruckspeicher 27 verbunden, welcher wiederum eine Verbindung an das Bremsflüssigkeitsreservoir 2 aufweist. Der Niederdruckspeicher 27 ist außerdem durch ein weiteres Ventil mit der Radbremse 6, 7, verbunden.

Im erfindungsgemäßen Synchronbetrieb wird in dieser Ausführungsform der Linearaktuator 5 und die hydraulische Pumpe 26 parallel geschaltet und gleichzeitig betrieben. Dazu bleibt das Umschaltventil 25 geöffnet, sodass der Linearaktuator 5 eine strömungsoffene Verbindung in die Radbremsen 6, 7 aufweist. Weiter wird das Pumpentrennventil 24 geöffnet, sodass die hydraulische Pumpe 26 aus dem Niederdruckspeicher 27 und durch diesen aus dem Bremsflüssigkeitsreservoir 2 Bremsflüssigkeit saugen kann. Linearaktuator 5 und hyderaulische Pumpe fördern somit jeweils ein eigenes Volumen, welches sich zu einem Gesamtvolumen summiert, welches in die Radbremsen 6, 7 gefördert wird.

Die Ansteuerung der hydraulischen Pumpe 26 und des Linearaktuators 5 kann wie oben zur ersten Ausführungsform beschrieben durch zwei getrennte Steuergeräte erfolgen.

### Bezugszeichenliste:

- 1: Bremsanlage
- 2: Bremsflüssigkeitsreservoir
- 3: Hauptbremszylinder
- 4: Simulator
- 5: Linearaktuator
- 6: Radbremse
- 7: Radbremse
- 8: Radbremse
- 9: Radbremse
- 10: Simulatorventil
- 14: Einlassventil
- 15: Auslassventil
- 16: Systemdrucksensor
- 17: Hauptbremszylinderdrucksensor
- 19: Erstes Versorgungsventil
- 20: Zweites Versorgungsventil
- 21: Erstes Absperrventil
- 22: Zweites Absperrventil
- 23: Nachsaugventil
- 24: Pumpentrennventil
- 25: Umschaltventil
- 26: Hydraulische Pumpe
- 27: Niederdruckspeicher
- 28: Kreistrennventil

## Patentansprüche

1. Verfahren zur Steuerung einer Bremsanlage (1) aufweisend einen Linearaktuator (5) und eine hydraulische Pumpe (26), wobei ein Bremsanforderungssignal überwacht wird und bei einer Änderungsrate des Bremsanforderungssignals größer als ein Schwellwert der Linearaktuator (5) und die hydraulische Pumpe (26) in einen Synchronbetrieb geschaltet werden, wobei in dem Synchronbetrieb der Linearaktuator (5) und die hydraulische Pumpe (26) gleichzeitig betrieben werden hydraulisches Volumen in zumindest eine Radbremse (6, 7, 8, 9) zu fördern, um einen Bremsdruck in der Radbremse (6, 7, 8, 9) aufzubauen **dadurch gekennzeichnet, dass** die hydraulische Pumpe (26) und der Linearaktuator (5) parallelgeschaltet werden, wobei die Saugseite der hydraulischen Pumpe (26) mit einem Hydraulikreservoir (2, 27) verbunden wird.

2. Verfahren nach einem der vorhergehenden Ansprüche, **dadurch gekennzeichnet, dass** das Bremsanforderungssignal durch einen Bremsensensor (17) oder ein Fahrassistenzsystem generiert wird.

3. Verfahren nach einem der vorhergehenden Ansprüche, **dadurch gekennzeichnet, dass** der Linearaktuator (5) von einem ersten Steuergerät geregelt wird und die hydraulische Pumpe (26) von einem zweiten Steuergerät geregelt wird, wobei das erste Steuergerät und das zweite Steuergerät über eine Kommunikationsschnittstelle miteinander kommunizieren.

4. Verfahren nach Anspruch 3, **dadurch gekennzeichnet, dass** das erste Steuergerät das Bremsanforderungssignal auswertet und bei erkannter Änderungsrate des Bremsanforderungssignals größer als der Schwellwert einen Befehl zum Aktivieren der hydraulischen Pumpe (26) an das zweite Steuergerät sendet.

5. Verfahren nach Anspruch 2 und 3, **dadurch gekennzeichnet, dass** der Bremsensensor ein hydraulischer Drucksensor (16) ist, welcher durch das zweite Steuergerät ausgelesen wird.

6. Verfahren nach einem der Ansprüche 3 bis 5, **dadurch gekennzeichnet, dass** das zweite Steuergerät das Bremsanforderungssignal auswertet und bei erkannter Änderungsrate des Bremsanforderungssignals größer als der Schwellwert die hydraulische Pumpe (26) aktiviert.

7. Verfahren nach einem der Ansprüche 3 bis 6, **dadurch gekennzeichnet, dass** das zweite Steuergerät ein erstes Bremsanforderungssignal auswertet und bei erkannter Änderungsrate des ersten Bremsanforderungssignals größer als ein erster Schwellwert die hydraulische Pumpe (26) mit einer ersten Leistung ansteuert und das erste Steuergerät ein zweites Bremsanforderungssignal auswertet und bei erkannter Änderungsrate des zweiten Bremsanforderungssignals größer als ein zweiter Schwellwert den Befehl zum Aktivieren der hydraulischen Pumpe (26) an das zweite Steuergerät sendet, wobei das zweite Steuergerät bei Erhalt des Befehls die hydraulische Pumpe (26) mit einer zweiten Leistung, größer als die erste Leistung, ansteuert.

8. Verfahren nach einem der vorhergehenden Ansprüche, **dadurch gekennzeichnet, dass** ein Übergang vom Synchronbetrieb in einen Einzelbetrieb der hydraulischen Pumpe (26) durchgeführt wird, wenn der Linearaktuator (5) seinen Kniepunkt erreicht, eine ABS-Regelung ausgelöst wird oder ein vorbestimmter Blockierdruck erreicht wird.

9. Verfahren nach einem der vorhergehenden Ansprüche, **dadurch gekennzeichnet, dass** ein hydraulisches Ventil (25) parallel zur hydraulischen Pumpe (26) und seriell zwischen Linearaktuator (5) und einer Radbremse (6, 7, 8, 9) angeordnet ist und das hydraulische Ventil (25) im Synchronbetrieb geöffnet oder geschlossen ist.

10. Verfahren nach einem der vorhergehenden Ansprüche, **dadurch gekennzeichnet, dass** die Bremsanlage (1) zwei Teilkreise umfasst, wobei jedem Teilkreis zwei Radbremsen (6, 7, 8, 9) und eine hydraulische Pumpe (26) zugeordnet ist und im Synchronbetrieb beide Pumpen (26) aktiviert werden und der Linearaktuator (5) mit nur einem Teilkreis oder beiden Teilkreisen verbunden wird.

11. Bremsanlage für Kraftfahrzeuge aufweisend einen Linearaktuator (5) und eine hydraulische Pumpe (26), **dadurch gekennzeichnet, dass** diese dazu eingerichtet ist, ein Verfahren nach einem der Ansprüche 1 bis 10 durchzuführen.

## Claims

1. A method for controlling a brake system (1), having a linear actuator (5) and a hydraulic pump (26), wherein a braking request signal is monitored and, if a rate of change of the braking request signal is greater than a threshold value, the linear actuator (5) and the hydraulic pump (26) are switched into synchronous operation, wherein, in said synchronous operation, the linear actuator (5) and the hydraulic pump (26) are operated simultaneously to deliver hydraulic volume into at least one wheel brake (6, 7, 8, 9) in order to build up a braking pressure in the wheel brake (6, 7, 8, 9), **characterised in that** the hydraulic pump (26) and the linear actuator (5) are connected in parallel, wherein the suction side of the hydraulic pump (26) is connected to a hydraulic reservoir (2, 27).

2. The method of any one of the preceding claims, **characterised in that** the braking request signal is generated by a brake sensor (17) or a driving assistance system.

3. The method of any one of the preceding claims, **characterised in that** the linear actuator (5) is controlled by a first control unit and the hydraulic pump (26) is controlled by a second control unit, wherein the first control unit and the second control unit communicate with one another via a communication interface.

4. The method of claim 3, **characterised in that** the first control unit evaluates the braking request signal and sends a command for activating the hydraulic pump (26) to the second control unit if a detected rate of change of the braking request signal is greater than the threshold value.

5. The method of claims 2 and 3, **characterised in that** the brake sensor is a hydraulic pressure sensor (16) which is read out by the second control unit.

6. The method of any one of claims 3 to 5, **characterised in that** the second control unit evaluates the braking request signal and activates the hydraulic pump (26) if a detected rate of change of the braking request signal is greater than the threshold value.

7. The method of any one of claims 3 to 6, **characterised in that** the second control unit evaluates a first braking request signal and, if a detected rate of change of the first braking request signal is greater than a first threshold value, activates the hydraulic pump (26) at a first output, and the first control unit evaluates a second braking request signal and, if a detected rate of change of the second braking request signal is greater than a second threshold value, sends the command for activating the hydraulic pump (26) to the second control unit, wherein the second control unit activates the hydraulic pump (26) at a second output, greater than the first output, when the command is received.

8. The method of any one of the preceding claims, **characterised in that** a transition from synchronous operation to individual operation of the hydraulic pump (26) is carried out when the linear actuator (5) reaches its knee point, an ABS control operation is triggered, or a predetermined locking pressure is reached.

9. The method of any one of the preceding claims, **characterised in that** a hydraulic valve (25) is arranged in parallel with the hydraulic pump (26) and in series between the linear actuator (5) and a wheel brake (6, 7, 8, 9), and the hydraulic valve (25) is open or closed in synchronous operation.

10. The method of any one of the preceding claims, **characterised in that** the brake system (1) comprises two subcircuits, wherein two wheel brakes (6, 7, 8, 9) and a hydraulic pump (26) are assigned to each subcircuit and, in synchronous operation, both pumps (26) are activated and the linear actuator (5) is connected to only one subcircuit or to both subcircuits.

11. A brake system for motor vehicles, having a linear actuator (5) and a hydraulic pump (26), **characterised in that** said brake system is designed to carry out a method of any one of claims 1 to 10.

## Revendications

1. Procédé de commande d'un système de freinage (1) présentant un actionneur linéaire (5) et une pompe hydraulique (26), dans lequel un signal de demande de frein est surveillé, et à un taux de variation du signal de demande de frein supérieur à une valeur seuil, l'actionneur linéaire (5) et la pompe hydraulique (26) sont commutés en fonctionnement synchrone, dans lequel, en fonctionnement synchrone, l'actionneur linéaire (5) et la pompe hydraulique (26) sont actionnés simultanément pour délivrer un volume hydraulique dans au moins un frein de roue (6, 7, 8, 9) afin de créer une pression de freinage dans le frein de roue (6, 7, 8, 9), **caractérisé en ce que** la pompe hydraulique (26) et l'actionneur linéaire (5) sont connectés en parallèle, dans lequel le côté aspiration de la pompe hydraulique (26) est connecté à un réservoir hydraulique (2, 27).

2. Procédé selon l'une quelconque des revendications précédentes, **caractérisé en ce que** le signal de demande de frein est généré par un capteur de freinage (17) ou un système d'aide à la conduite.

3. Procédé selon l'une quelconque des revendications précédentes, **caractérisé en ce que** l'actionneur linéaire (5) est commandé par une première unité de commande et que la pompe hydraulique (26) est commandée par une seconde unité de commande, dans lequel la première unité de commande et la seconde unité de commande communiquent entre elles par l'intermédiaire d'une interface de communication.

4. Procédé selon la revendication 3, **caractérisé en ce que** la première unité de commande évalue le signal de demande de frein et envoie une commande d'activation de la pompe hydraulique (26) à la seconde unité de commande si le taux de variation du signal de demande de frein est détecté supérieur à la valeur seuil.

5. Procédé selon les revendications 2 et 3, **caractérisé en ce que** le capteur de frein est un capteur de pression hydraulique (16) qui est lu par la seconde unité de commande.

6. Procédé selon l'une quelconque des revendications 3 à 5, **caractérisé en ce que** la seconde unité de commande évalue le signal de demande de frein et active la pompe hydraulique (26) lorsque le taux de variation du signal de demande de frein est détecté supérieur à la valeur seuil.

7. Procédé selon l'une quelconque des revendications 3 à 6, **caractérisé en ce que** la seconde unité de commande évalue un premier signal de demande de frein et, si le taux de variation du premier signal de demande de frein est détecté supérieur à une première valeur seuil, commande la pompe hydraulique (26) avec une première puissance, et la première unité de commande évalue un second signal de demande de frein, et si le taux de variation du second signal de demande de frein est détecté, envoie la commande d'activation de la pompe hydraulique (26) à la seconde unité de commande, dans lequel la seconde unité de commande, lorsque la commande est reçue, commande la pompe hydraulique (26) avec une seconde puissance supérieure à la première puissance.

8. Procédé selon l'une quelconque des revendications précédentes, **caractérisé en ce qu'**une transition d'un fonctionnement synchrone à un fonctionnement unique de la pompe hydraulique (26) est effectuée lorsque l'actionneur linéaire (5) atteint son point de coude, qu'une commande ABS est déclenchée ou qu'une pression de blocage prédéterminée est atteinte.

9. Procédé selon l'une quelconque des revendications précédentes, **caractérisé en ce qu'**une soupape hydraulique (25) est disposée parallèlement à la pompe hydraulique (26) et en série entre l'actionneur linéaire (5) et un frein de roue (6, 7, 8, 9) et que la soupape hydraulique (25) est ouverte ou fermée en mode synchrone.

10. Procédé selon l'une quelconque des revendications précédentes, **caractérisé en ce que** le système de freinage (1) comprend deux circuits de pas, dans lequel deux freins de roue (6, 7, 8, 9) et une pompe hydraulique (26) sont affectés à chaque circuit de pas, et en fonctionnement synchrone, les deux pompes (26) sont activées et l'actionneur linéaire (5) est connecté à un seul ou aux deux circuits de pas.

11. Système de freinage pour véhicules à moteur comprenant un actionneur linéaire (5) et une pompe hydraulique (26), **caractérisé en ce que** ceux-ci sont conçus pour mettre en œuvre un procédé selon l'une quelconque des revendications 1 à 10.
